## Europäisches Patentamt

(19) ## European Patent Office

## Office européen des brevets

(11) Publication number: **0 187 515**
**B1**

(12) # EUROPEAN PATENT SPECIFICATION

(45) Date of publication of the patent specification:
29.06.88

(51) Int. Cl.⁴: **B 05 B 13/00,** B 05 B 15/04,
C 03 C 17/22

(21) Application number: **85309396.1**

(22) Date of filling: **20.12.85**

(54) Hood for coating glass containers and coating method.

(30) Priority: **20.12.84 US 684046**
**14.11.85 US 798092**

(43) Date of publication of application:
**16.07.86 Bulletin 86/29**

(45) Publication of the grant of the patent:
**29.06.88 Bulletin 88/26**

(84) Designated Contracting States:
**AT BE CH DE FR GB IT LI LU NL SE**

(56) References cited:
**US-A-3 623 854**
**US-A-4 389 234**
**US-E-28 076**

(73) Proprietor: **M & T CHEMICALS, INC., One
Woodbridge Center, Woodbridge, New Jersey
07095 (US)**

(72) Inventor: **Lindner, Georg Heinrich, Haydnlaan 10,
NL- 4384 KV Vlissingen (NL)**
Inventor: **Barkalow, Raymond William, 4 Marc
Lane, Jackson New Jersey 08527 (US)**

(74) Representative: **Ford, Michael Frederick,
MEWBURN ELLIS & CO. 2/3 Cursitor Street,
London EC4A 1BQ (GB)**

EP 0 187 515 B1

## Description

The instant invention relates generally to a coating hood and a method for applying a protective coating to hollow glass containers according to the preambles of claims 1 and 10, respectively and more particularly, to an air flow guide which direcstreams of vapor free air over the finish of the container to limit the accumulation of coating compound thereon.

The desirability of applying protective coatings to the exterior of hollow glass containers has long been recognized. Such coatings, which include tin, titanium, or other heat decomposable metallic compounds, or organometallic compounds, protect the glass containers from surface damage, such as abrasions and scratches, which result in a loss of tensile strength for the glass containers. The need for high-tensile strength in glass containers is particularly acute when containers are mass-produced, move rapidly in close proximity along high-speed conveyor lines, and are subsequently filled with carbonated beverages, beer, wine, foodstuffs, and the like that produce gaseous pressure within the container.

Such protective coatings are usually applied as the glass containers emerge in a heated, fully-shaped condition from a glassware forming machine, that is, at the "hot end" of the system. The containers are transported away from the forming machine by a conveyor. Temperatures in excess of 400 degrees centigrade exist at the surface of the glass containers, so that when a heat decomposable inorganic metallic, or organometallic, compound is applied thereto, the compound decomposes immediately and is converted to a metallic oxide coating.

One well-known and previously widely used technique for applying a protective coating to the hot glass containers calls for spraying the opposite sides of the containers as they travel on a conveyor, in single file, through two longitudinally spaced, oppositely positioned spray heads. Each spray head covers approximately 180 degrees of the circumference of the bottle, so that at least two spraying stations are required to coat the entire bottle. Receivers are positioned at the opposite side of the conveyor in alignment with the spray heads. Pressurized air with the coating compound entrained therein is discharged from each spray head at a significant pressure, while the receivers are usually maintained at a low pressure. The net pressure differential increases the velocity, and thus the effectiveness, of the coating compound. coating systems of this nature are disclosed in U.S. patent No. 3 516 811, granted June 23, 1980, to G. L. Gatchet et al., and U. S. patent No. 3 684 469, granted August 14, 1972 to W.C. Goetzer et al.

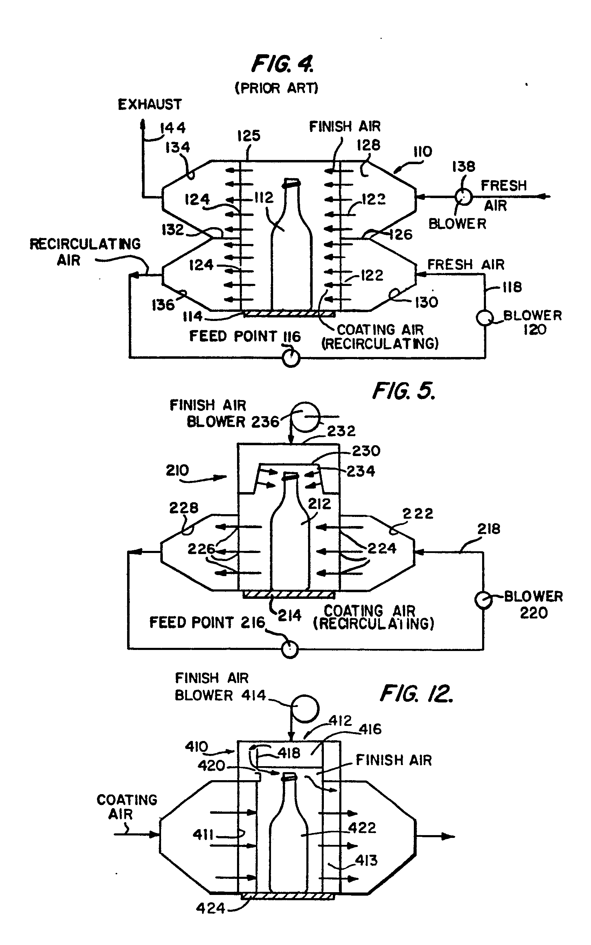

Gatchet et al. recognized that the deposition of a metallic oxide coating on the finish of the glass container passing on a conveyor through the open-sided coating apparatus was undesirable, as noted in column 3, lines 21 - 57. To control the location of the metal oxide deposit, as well as the uniformity of the deposit, Gatchet et al. relied upon spray heads producing a (theoretically) laminar flow that would pass laterally across the width of the conveyor, as shown in Fig. 4 of the patent.

The above-described coating systems, however, are "open-sided" and are thus adversely influenced by ambient conditions in the factory where the glass containers are formed. The ambient conditions of prime concern are rapidly moving air currents, the moisture in the air, and the potentially toxic and/or corrosive fumes and pollutants issuing from the spray heads. Air currents can cause turbulent conditions at the spray heads that will cause a preferential or uneven, application of the protective coating, and some of the coating will accumulate on the bottle finish. The rapidly moving air currents disrupt the laminar flow patterns that are theoretically possible with "open-sided" systems, and the capability of uniformly, and consistently, applying the same thickness of coating is severly reduced. To compensate for air currents, the above-described systems are operated at higher pressures, and with greater throughput of coating compound, than would be required under quiescent conditions. The moisture in this hostile atmosphere causes hydrolysis loss by rendering some of the compound unf it for its intended purpose. The escape of potentially toxic fumes into the atmosphere at the work place constitutes an occupational health hazard that may violate Federal, state and local ordinances. Also, the toxic fumes, are highly corrosive and attack various components of the glass factory, such as the blowers, exhaust systems, conveyors, and even roofs, leading to increased plant maintenance costs. Furthermore, the efficiency, of, these "open-sided" systems is low, since much of the relatively expensive coating compound is wasted.

A second, well-known, and widely employed technique for applying a protective coating to, hot glass containers relies upon a formed, sheet metal coating hood with spray heads and associated receivers situated therein. The coating hood obviates many of the problems associated with the open-ended spray systems discussed above. For example, the hood isolates the glass containers to be coated from the ambient conditions and furnishes a controlled atmosphere that enhances the coating operations. The hood includes an exhaust system which captures most of the air entrained coating compound that does not adhere to the containers, thus reducing the problems of venting the system and minimizing the opportunity for the coating compound to attack building components. Also, such hood can significantly raise the coating efficiency of the systems, with attendant cost savings.

Representative coating hoods are disclosed in U.S. Patent No. 3 819 404, granted June 25, 1974 to Addison B. Scholes and Joseph J. Kozlowski, in. U. S. Patent No. 3 933 457, granted January 20, 1976 to Addison B. Scholes, and in U. S. Patent No. 4 389 234, granted June 21, 1983 to Georg H. Lindner, one of the co-inventors of the present application. While, the two earlier patents functioned satisfactorily in operation, the more recent patent to Lindner depicts a coating hood of far superior design that has gained widespread recognition, in the glass industry in this country and in several foreign countries, as representing the standard of excellence for contemporary coating hoods.

Lindner presents a coating hood including a tunnel for allowing containers to pass therethrough, and a vertically adjustable flat roof for accommodating containers of various sizes. At least two jet slots are located in each side walls and at least two receivers or suction slots are aligned therewith. The jet slots and the suction slots are interspersed opposite to each other in each side wall. The coating compound is introduced through at least one feedpoint, and blowers secured to the side walls furnish high velocity air containing the coating compound to the interior of the hood. Baffles are situated in the flow path of the high velocity air so that the jets issuing from the jet slots are well defined and thus better suited for their intended function.

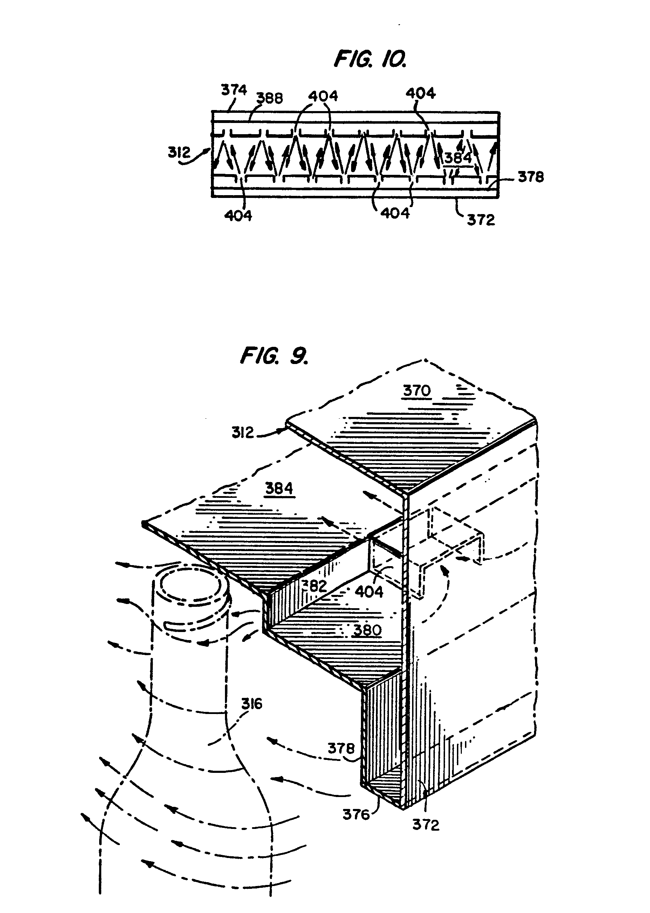

In a unique fashion in the Lindner coating hood, two or more recirculating loops are defined by the judicious selection of blowers, jet slots and receivers. The coating compound is fed intothe innermost loop (that is, loop A in Fig. 8 of the cited US-A-4 389 234), and the eddy currents created between loops by the closely spaced, oppositely directed jets transfer the coating compound to the intermediate loop (that is, loop a in Fig. 8) and thence the outermost loop (that is, loop C in Fig. 8). The outer loop will have the lowest coating compound concentration and, consequently, less compound is lost to the exhaust system.

The employment of recirculating loops within the coating hood has led to more uniform coatings and greater consistency in the coating operation over extended periods of time. Thus, the coating hood described in the Lindner patent has met with great commercial success, and has functioned admirably in numerous glass manufacturing plants in the United States and abroad.

However, when a "hot end" coating is applied to glass containers, it is necessary to avoid depositing an excessive thickness of metal oxide coating on the upper part of the container including the neck and the threads; such area is commonly known as the finish of the container. Coating on the finish interferes with the application of a screw cap, lids crown or the like to the container after the container has been filled. Additionally, the metal oxide coating on the finish may interact with the dissimilar metal of the cap, lid, crown, and the like to produce an unsightly corrosion problem or result in a high torque necessary for cap removal. Such corrosion problem, with its visual blemishes, is particularly acute since the coated glass containers are usually employed for beers, wines, soft drinks and foodstuffs, and the ultimate consumers will not purchase products even appearing to be tainted.

Still further, apart from the cap related problems, it is sometimes required that no coating be deposited inside the containers, particularly in medical and pharmaceutical applications. This, however, requires a coating system which completely avoids contact between the coating compound and the bottle finish. This requirement, however, has not been met with conventional types of coating systems. Therefore, because it is difficult to coat the main body of the container without coating the finish, it has been generally accepted that a coating thickness on the finish can be one-third that on the main body.

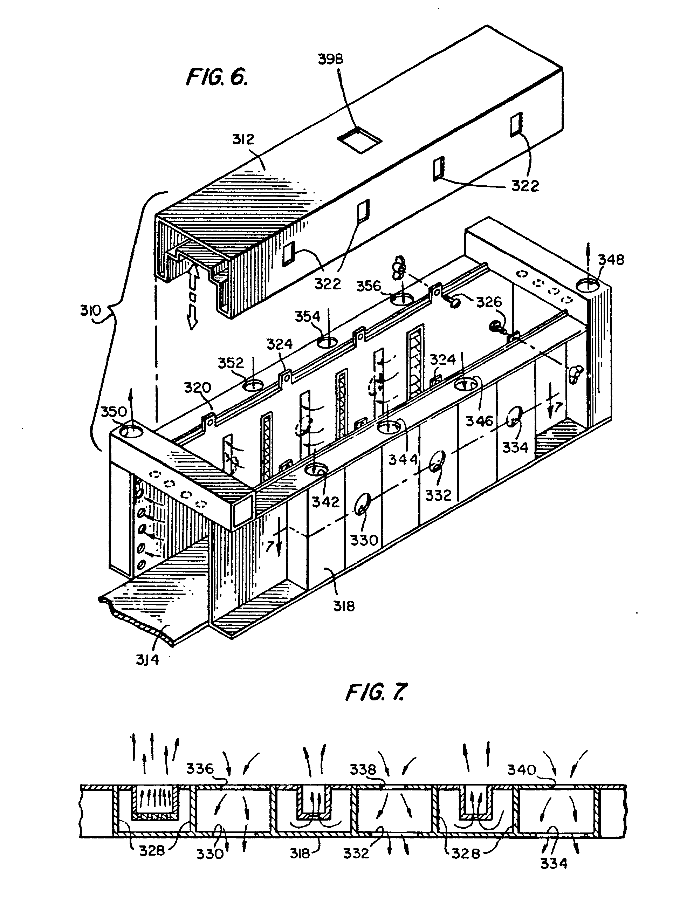

The aforementioned patent US-A-4 389 234 patent relies upon the high velocity flow of air with entrained coating compound passing across the width of the coating chamber to coat the glass containers passing therethrough. As shown in Figs. 6 and 7 of the Lindner patent, a baffle with specifically configured apertures and horizontally extending ribs produces a substantially even flow of air over the full height of the coating chamber. While the operation of such hood has been far superior to previously known coating hoods in almost every aspect of performance, coating compound is deposited on the finish of the containers passing through the hood. Thus, this hood is only suitable for coating containers on which finish protection is of no concern.

At least one other known coating hood has also recognized the desirability of minimizing, if not preventing, the deposition of coating compound on the finish of the containers being coated, but has not realized this objective. While these other coating hoods have not even approached the Lindner coating hood in performance, they are discussed hereinafter to present a complete picture of the state of the art prior to the instant invention.

Another known coating hood is shown in U.S. Reissue Patent No. 28 076, granted July 16, 1974 to B. O. Augustsson and R.S. Southwick. Fig. 2 of the Augustsson et al. patent, which is assigned to the Glass Container Manufacturers Institute, Inc. New York, New York, shows a coating hood employing a horizontal barrier in each chamber in both side walls to divide each coating chamber into an upper chamber and a lower chamber of approximately equal dimensions. A stream of air with coating compound entrained therein is discharged from jet slots or nozzles in the lower chamber to coat the body of the glass bottle passing thereby; and the air stream with the unused coating compound passes into the lower chamber defined in the opposite side wall of the hood and is recirculated in a continuous manner.

A separate, distinct stream of fresh air, free from the vapor of the coating compound, is blown through the upper chamber in one side wall and is exhausted through the upper chamber in the opposing side wall, and through the top of the hood in a single pass. Both streams of air pass across the lateral extent of the coating hood in the same direction, and at high velocities. The upper stream of fresh air is intended to keep the coating compound in the lower stream of air from reaching the container finish. However, under the hostile operating conditions experienced in glass manufacturing plants, the two streams of air intermix to a certain extent and have proven incapable of consistently keeping the coating compound removed from the container finish. It was found in actual tests that there was a coating thickness of approximately 12 CTUs (coating thickness units) on the finish with this hood. A CTU is a well known measure of the thickness of the coating by the American Glass Research Institute of Butler, Pa. This corresponded to a thickness on the finish of approximately 30 % of the coating thickness on the main body of the container. Even employing higher flow velocities in the upper vapor free air stream failed to consistently keep the coating compound from being deposited on the finish of the container. Such increased flow velocities also provide an increase in the amount of fresh air that is used, which results in an excessive usage of coating compound. In addition, only part of the hood length, in the direction of travel of the containers, is provided with the fresh air streams for finish protection, further increasing the amount of coating compound deposited on the finish of the containers.

In addition to the aforementioned coating hoods shown in the patents to Augustsson et al. and Lindner, the corporate assignee of Lindner has attempted using a first blower to force a stream of coating compound laterally across the width of the coating chamber, and a second blower to force a stream of vapor free air downwardly through apertures in the roof of the chamber. This coating hood, however, does not constitute prior art against the present application, and is merely added to complete the picture to show what has been attempted to cure the problem of coating on the finish of the containers. With this coating hood, the roof of the chamber has an inverted U-shape to allow the neck of the bottle to pass therethrough. In such hood, however, the two streams intermix and cause a marked decrease in the deposition rate of the coating compound. It was found that, with such hood, the coating on the finish had a thickness generally one-third that of the thickness of the coating on the main body of the container, which is clearly undesirable. This was due to the finish air mixing with the coating air, whereby the coating compound was applied to the finish of the containers. Further, due to the dilution of the coating air with the finish air, the consumption of coating compound increased by as much as 20 % to maintain the required coating thickness on the main body of the container.

The foregoing coating hoods, particularly the Lindner coating hood, per formed satisfactorily under most operating conditions, but did not realize the desirable objective of minimizing, if not completely avoiding, the deposition of coating compound on the finish of the containers being coated. Such objective, if achieved, would eliminate the amount of coating on the finish without increasing the compound used per container. Furthermore, the absence of coating compound on the finish of each container avoids unsightly corrosion problems when caps are applied to the containers, while the strength of the container is retained undiminished. Also, if such objective could be achieved without using an inordinate number of blowers to force the air across the coating chamber, a relatively inexpensive and easy to operate coating hood could be realized.

With the deficiencies of known coating hoods clearly in mind, the instant invention presents simple means for effectively separating the vapor free finish air stream from the air stream with the coating compound entrained therein.

The hood and the method of the present invention are characterized by the characterizing features of claims 1 and 10, respectively.

In the hood of the present invention coating free air is directed towards the finish of the containers passing through the coating hood by means of finish air jet forming means positioned on opposite sides of the containers, the finish air jet forming means on one side of the containers being offset in the longitudinal direction of the hood with respect to the finish air jet forming means on the other side of the containers. The lateral boundaries of the envelope of each finish air jet forming means on one side of the containers are substantially coincident with lateral boundaries of the envelopes of the offset and laterally adjacent finish air jet forming means on the other side of the containers. Each finish air jet forming means may include an opening having a substantially rectangular configuration such that the lateral boundaries of each envelope are substantially vertical.

The coating jets for coating the main body of the containers are situated at a level below the finish air jet forming means, the vertical separation between the coating jets and the finish air jet forming means being preferably 2 - 8 cm. As a result of the arrangement of the finish air jets, a quiet zone between two finish air jets blowing from one side is completely filled with moving air from one of the opposing finish air jets blowing from the other side, without interference between the opposing finish air jets. This means that intermixing of the finish air jets at the lateral boundaries of the envelopes thereof only occurs with other finish air jets, since there is no quiet zone which can be reached by a coating air jet. Thus, each finish air jet is only in contact with the coating air jets in the lower part of the hood, that is, at the lower part of the finish air curtain, so that intermixing of the coating air with the finish air is minimized and the finish air contacting the container finish is effectively free of coating compound.

With the present invention the finish air stream can be constituted by a relatively small volume of vapor free air, while the air streams with the coating compound entrained therein are constituted by a relatively large volume of high velocity air. Moreover it has been found that the presence of the finish air stream need not cause any effective increase in the amount of coating compound consumed.

In a preferred embodiment of the coating hood of the invention an air flow guide is secured between the side walls of the hood adjacent the upper end thereof, said air flow guide including a horizontal roof, first and second depending side walls, a stepped underside that terminates in a centrally located inner top wall spaced below said roof, and a chamber defined between said roof, depending side walls, stepped underside and top wall. The finish air jet forming means may be formed in the stepped underside of the air flow guide. By so constructing the air flow guide that the lateral dimensions at the upper end of the coating hood are reduced by the configuration of the air flow guide, the finish air stream minimizes the deposition of coating compound on the finish of the containers. The foregoing factors contribute to the realization of a coating hood wherein the two air streams ire effectively separated, the intermixing of the air streams is reduced, and the coating hood performs more effectively and at a lower cost per coated container.

The air flow guide may be adjustable vertically elative to the side walls of the coating hood, so that containers of different heights can be effectively coated while the accumulation of coating compound on the finish of the container is minimized. The air flow guide may also be formed in different widths for securement between the side walls of the coating hood, thus enabling efficient coating operations with containers of different widths.

The air flow guide not only limits the deposition of coating compound on the finish of the container being coated, but the guide precludes the accumulation of any coating within the interior of the container. This capability is particularly significant when manufacturing containers for medical purposes, and sanitary standards of the highest order must be observed.

Lastly, the air flow guide functions in harmony with existing spray hoods, and is compatible with spray hoods that utilize recirculating loops for enhanced performance.

With the present invention it is possible to achieve operating economies not realized by known coating hoods, wherein unnecessary and unwanted coating on the finish may be responsible for 15 - 20 % of the coating compound consumption. Manifestly, every increment in coating effectively translates into material savings with high speed, mass production glass coating operations.

In the accompanying drawings
Fig. 1 is a perspective view of a first conventional coating hood;
Fig. 2 is a vertical cross-sectional view of the coating hood. of Fig. 1, such view being taken along line 2 - 2 in Fig. 1 and in the direction indicated;
Fig. 3 is a schematic view of the recirculating flow paths established within the coating hood of Fig. 1
Fig. 4 is a schematic view of a second conventional coating hood;
Fig. 5 is a schematic view of a suggested modification to the coating hood of Fig. 1;
Fig. 6 is an exploded perspective view of a coating hood employing an air flow guide constructed in accordance with the principles of this invention;
Fig. 7 is a fragmentary, horizontal cross-sectional view through a side wall of the coating hood of Fig. 6, such view being taken along line 7 - 7 and in the direction indicated;
Fig. 8 is a vertical cross-sectional view through the coating hood of Fig. 6;
Fig. 9 is a fragmentary, perspective view of the air flow guide, such view being taken on an enlarged scale;
Fig. 10 is a schematic view of the flow paths for the finish air established within the coating hood of Figs. 6 - 9;
Fig. 11 is a schematic view of the flow paths for the high velocity air (with the coating compound entrained therein) established across the coating hood of Figs. 6 - 10;
Fig. 12 is a schematic view of a first alternative embodiment of the air flow guide of Figs. 6 - 11;
Fig. 13 is a schematic view of a second alternative embodiment of the air flow guide of Figs. 6 - 11; and
Fig. 14 is a schematic view of a third alternative embodiment of the air flow guide of Figs. 6 - 11.

**Detailed description of the preferred embodiments**

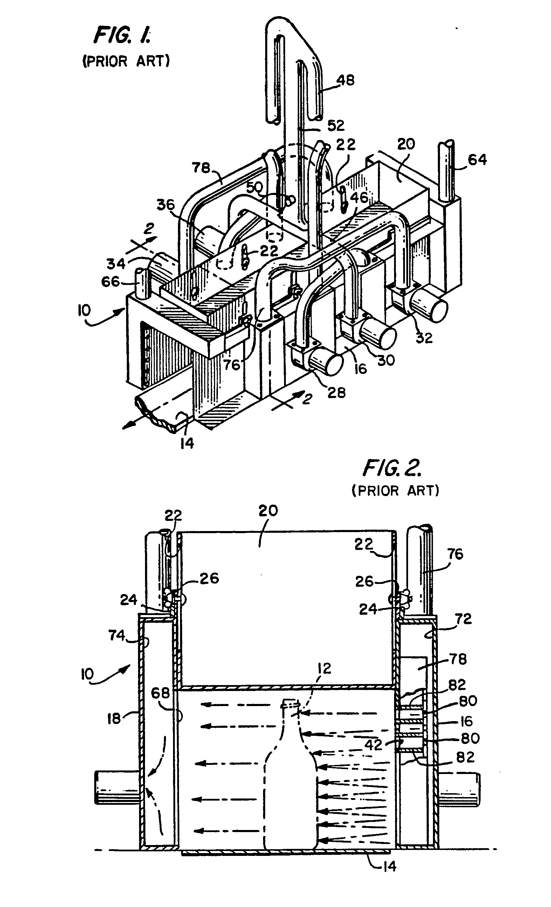

Figs. 1 - 3 illustrate the essential aspects of the coating hood disclosed in detail in U.S. Patent No. 4 389 234, granted June 21, 1983, to Georg H. Lindner, and assigned to M&T Chemicals, Inc. of Woodbridge, N.J., the assignee of the instant application. Such coating hood is briefly described hereinafter.

The coating hood is identified generally by reference numeral 10, and glass containers 12 to be coated are moved through the interior of the hood by conveyor 14. Hood 10 includes spaced side walls 16, 18, and an upwardly opening rectangular roof 20 extends laterally across the hood. Slots 22 are formed in the roof, and ears 24 are situated at the upper end of each side wall.

Fasteners 26 extend trough ears 24 and into the slots so that the roof 20 may be adjusted vertically relative to the side walls, thus allowing the hood to accommodate glass containers of different heights.

Side wall 16 is divided into six distinct chambers by vertically extending interior partitions (not shown), and side wall 18 is divided in a similar fashion. Blowers 28, 30 and 32 are secured to side wall 16, and blowers 34, 36 and 38 are secured to the opposite side wall.

Jet slots 40 and 42 are formed in side wall 16 to discharge the high velocity flow from blowers 28 and 32, respectively. Jet slot 44 is formed in side wall 16 to discharge the high velocity flow, while conduits 46, 48 lead the high velocity flow past feedpoint 50 in control leg 52 before returning to jet slot 44. The coating compound to be applied to the glass containers is introduced into the hood at feedpoint 50.

Jet slots 54 and 56 are formed in side wall 18 to discharge the high velocity flow from blowers 34 and 38, respectively. Jet slot 58 is formed in side wall 18 to discharge the high velocity flow from blower 36, while conduits 60, 62 lead the high velocity flow past feedpoint 50 in central leg 52 before returning to jet slot 58. An exhaust port 64 is located at the entrance of the coating hood, and another exhaust port 66 is located at the exit of the coating hood.

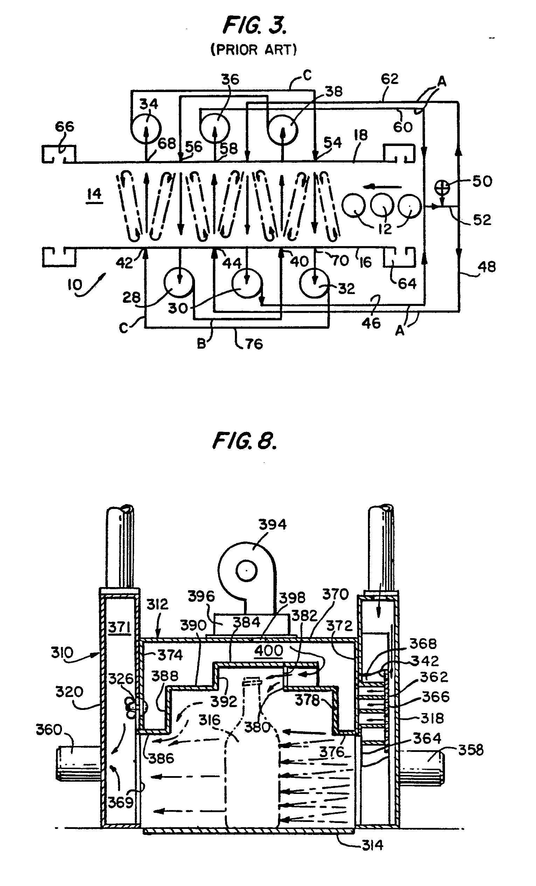

A receiver slot is formed in the side wall opposite each jet slot, as indicated in Fig. 3. For example, receiver slot 68 is formed in the inner face of side wall 18 opposite jet slot 42, and receiver slot 70 is formed in the inner face of side wall 16 opposite jet slot 54. Receiver slot 68 allows the high velocity air traversing the width of the coating hood to flow into the intake side of blower 34, while receiver slot 70 allows the high velocity air traversing the coating hood to flow into the intake side of blower 32. By the judicious placement of jet slots and receiver slots, coating hood 10 produces three separate recirculating loops, or flow paths, for the high velocity air (with coating compound entrained therein) passing therethrough. The loops are identified as loops A, B and C in Fig. 3. Loop A is the innermost recirculating loop, loop B is the intermediate recirculating loop, and loop C is the outermost recirculating loop. The coating compound is introduced into loop A at feedpoint 50, and eddy currents transfer the coating compound to the outer loops B and C, though at reduced concentrations. The glass containers 12 passing through the coating hood are thus coated repeatedly, and in opposing directions, by the coating compound entrained in the high velocity air streams. The recirculating loops have greatly enhanced the performance of coating hood 10 while significantly reducing the consumption of coating compound.

Fig. 2 reveals that the side walls 16, 18 of coating hood 10 are divided into separate chambers. Chambers 72 and 74 are representative of these chambers. Jet slot 42 is located in the interior face of chamber 72, and receiver slot 68 is located in the interior face of chamber 74. The high velocity air is introduced into chamber 72 via conduit 76 leading from blower 32. After passing across the width of the hood and entering chamber 74, the high velocity air is drawn into the intake side of blower 34.

A baffle 78 is situated in the chamber 72 so that the high velocity air must flow therethrough prior to passing through jet slot 42. Several apertures 80 are formed through the rear wall of the baffle, and the apertures cooperate with horizontally extending ribs 82 to divide the air stream into several vertically spaced, laminar streams. The laminar streams, which have coating compound entrained therein, efficiently coat the glass containers passing thereby. While the baffle may be configured to direct the laminar streams principally against the body of the container to be coated, as suggested by the flow arrows in Fig. 2, a significant fraction of the coating inevitably accumulates on the finish of the glass containers. This accumulation is wasteful, costly, and potentially detracts from the physical appearance of the coated glass containers, as discussed supra. Thus, this hood is only suitable for coating containers on which finish protection is of no concern.

While Figs. 1 - 3 depict the coating hood disclosed in U.S. Patent No. 4 389 234, Fig. 4 schematically represents the known coating hood disclosed in U.S. Reissue Patent No. 28 076, granted July 16, 1974 to S.O. Augustsson et al. and assigned, on its face, to Glass Container Manufacturers Institute, Inc., New York, New York. While a brief description of the Augustsson et al. coating hood is set forth in the succeeding paragraphs, a comprehensive description can be gleaned from the cited Reissue patent.

Fig. 4 schematically represents this second, well-known coating hood, indicated generally by reference numeral 110, for coating glass containers at the "hot end" of a glass manufacture line. The containers 112, while at a temperature of 400 degrees Centigrade or more, are transported, in single file, by a conveyor 114 through a tunnel formed in the hood 110. Coating compound is introduced into the hood at a feedpoint 116, and the coating compound is combined in line 118 with pressurized air from a first blower 120. The entrained coating compound is discharged through a plurality of slots 122, or nozzles, against one side of the container passing thereby. Rceiver slots 124 are aligned with the slots 122 and capture the unused coating compound that has not adhered to the container. The coating compound is recirculated past feedpoint 116 to slots 122 for application to the next container passing thereby. The jet slots 122 and the receiver slots 124 extend vertically from the base to the roof 125 of the hood 110.

A horizontal partition 126 divides the inlet side of the coating hood 110 into an upper inlet chamber 128 and a lower inlet chamber 130. Similarly, a horizontal partition 132 divides the outlet side of the coating hood into an upper outlet chamber 134 and a lower outlet chamber 136. The flow path for the lower, recirculating air flow with entrained coating compound traverses chambers 130 and 136.

A second, single pass air flow path is defined above partitions 126 and 132. Such flow path marks the directions of travel for fresh, vapor free air traveling across the lateral extent of the hood 110. A second blower 138 draws in fresh air and discharges the same from chamber 128 through the slots 122 situated above the partition 126. The air passes across the finish of container 112 and is captured in the aligned receiver slots 124 above partition 132, leading into chamber 134. The pressurized air passes through chamber 134 and is exhausted to atmosphere over vent line 144. The flow of the recirculating air with coating compound is indicated by directional arrows; the flow of the single pass air streams is similarly indicated.

It was found in actual tests that there was a coating thickness of approximately 12 CTUs (coating thickness units) on the finish with this hood. A CTU is a well known measure of the thickness of the coating by the American Glass Research Institute of Butler, Pa. This corresponded to a thickness on the finish of approximately 25 - 30 % of the coating thickness on the main body of the container. Even employing higher flow velocities in the upper vapor free air stream failed to consistently keep the coating compound from being deposited on the finish of the container. Such increased flow velocities also provide an increase in the amount of fresh air that is used, which results in an excessive usage of coating compound. In addition, only part of the hood length, in the direction of travel of the containers, is provided with the fresh air streams for finish protection, further increasing the amount of coating compound deposited on the finish of the containers.

The corporate assignee of Lindner has attempted using a first blower to force a stream of coating compound laterally across the width of the coating chamber, and a second blower to force a stream of vapor free air downwardly through apertures in the roof of the chamber, as schematically shown in Fig. 5, with the coating hood being indicated generally by reference numeral 210. This coating hood, however, does not constitute prior art against the present application, and is merely added to complete the picture to show what has been attempted to cure the problem of coating on the finish of the containers. As shown, the containers 212, while at a temperature of 400 degrees Centigrade or more, are transported, in single file, by a conveyor 214 through a tunnel formed in the hood 210. Coating compound is introduced into the hood at feedpoint 216, and the coating compound is combined in line 218 with pressurized air from blower 220. The entrained coating compound passes through inlet chamber 222 situated in one side wall of the hood, and is discharged through vertically spaced slots 224, or nozzles, against the container passing thereby. Some of the coating compound adheres to the container, while the unused compound passes through aligned receiver slots 226 into outlet chamber 228. The coating compound is then recirculated through line 218 for application to succeeding containers. Additional coating compound is introduced, when and if needed, through feedpoint 216 to maintain the efficiency of the coating process. The flow path for the coating compound is suggested by the directional arrows.

In an effort to minimize the deposition of coating compound on the finish of the bottle, an inverted U-shaped insert 230 was situated within the hood 210 below roof 232. Apertures 234 are defined in the walls of the insert, and a second blower 236 forces finish air through the apertures. The paths of travel for the oppositely directed finish air streams are suggested by the directional arrows at the upper end of the spray hood 210.

The finish air streams, however, have been found to intermix with, and dilute, the major stream of air with coating compound entrained therein. The intermixing and dilution of the major stream causes a decrease in the deposition rate for the coating. In order to compensate for this decrease, additional amounts of relatively costly coating compound must be used under actual operating conditions.

It was found that, with such hood, the coating on the finish had a thickness generally one-third that of the thickness of the coating on the main body of the container which is clearly undesirable. This was due to the finish air mixing with the coating air, whereby the coating compound was applied to the finish of the containers. Further, due to the dilution of the coating air with the finish air, the consumption of coating compound increased by as much as 20 % to maintain the required coating thickness on the main body of the container.

Referring now to Figs. 6 - 8, there is shown a coating hood 310 employing an air flow guide 312 constructed in accordance with the principles of the instant invention. Coating hood 310 is similar in structural detail and operational characteristics to coating hood 10 described briefly above, and described in detail in U.S. Patent No. 4 389 234. However, the upwardly opening rectangular roof 20 of coating hood 10 has been replaced by a unique air flow guide 312, with numerous attendant advantages that will become apparent hereinafter. It will be appreciated from the discussion which follows, however, that the present invention is not limited to this particular air flow guide, which is merely described in order to better illustrate the present invention; but rather, has wide applicability to any of the above prior art (and other) coating hoods.

A conveyor 314 advances glass containers 316 longitudinally, and in single file, through the interior of the hood. Hood 310 includes spaced side walls 318, 320, and the air flow guide 312 extends laterally therebetween. Slots 322 are formed in the opposite sides of the guide 312, and ears 324 are situated in the upper end of each side wall. Fasteners 326 extend through ears 324 into the slots so that the guide may be adjusted vertically relative to the side walls, thus allowing the hood to accommodate glass containers of different heights.

Side wall 318 is divided into six distinct chambers by vertically extending interior position walls 328, visible in Fig. 7. Three blowers (not shown in Figs. 6 and 7) are secured to side wall 318. The inlet, or low pressure side, of a first blower is connected to the aperture 330 in the second chamber of the side wall 318. The inlet of a second blower is connected to the aperture 332 in the fourth chamber of the side wall 318, and the inlet of a third blower is connected to the aperture 334 in the sixth chamber of the side wall 318. Apertures 330, 332 and 334 are aligned with receiver slots 336, 338 and 340, respectively, as shown in Fig. 7. The first, third, and fifth chambers receive high velocity air streams from other blowers through inlet ports 342, 344, 346 and discharge such streams across the width of the coating hood. An exhaust port 348 is situated at the entrance to coating hood 310, and a second exhaust port 350 is situated at the exit from the coating hood.

Side wall 320 is divided into six distinct chambers in a similar manner. Three blowers (also not shown) are secured to side wall 320. High velocity streams of air are introduced into the second, fourth, and sixth chambers in side wall 320 by inlet ports 352, 354 and 356. The paths of movement for the various air streams flowing through coating hood 310 are indicated by directional arrows. It is noted that the blower and related conduits have been omitted in order to enhance the clarity of the remaining components.

Fig. 8 is a vertical cross-sectional view through coating hood 310 showing a representative chamber, such as the first chamber in side wall 318. One of the motors 358 which drives one of the three blowers secured to side wall 318 is visible at one side of the hood, while one of the motors 360 which drives one of the three blowers secured to side wall 320 is visible at the opposite side of the hood. High velocity air enters the chamber through inlet port 342, flows downwardly through baffle 362 before passing through jet slot 364 into the interior of coating hood 310. Apertures 366 in the baffle are larger at their entrance than at their exit, and ribs 368 coact with the apertures to enhance the laminar flow characteristic of the high velocity air stream. The laminar flow passes across the coating hood and enters receiver slot 369 defined at the entrance to the first chamber 371 in side wall 320. The compound is introduced into the air stream at a feedpoint (not shown). The side wall of air flow guide 312 covers the upper end of the jet slot 364 and blocks passage of the high velocity air stream therethrough.

Air flow guide 312 fits between side walls 318, 320 and completes the coating hood 310. The guide can be adjusted vertically so that glass containers of different heights can be coated. Also, the flow guides can be formed in different widths, so that the lateral dimension of the coating hood can be adjusted to accommodate containers of greater, or less, widths.

As shown in Fig. 8, air flow guide 312 includes a horizontal roof 370, a first depending side wall 372, and a second depending side wall 374. A horizontal step 376 extends inwardly from side wall 372, and a vertical riser 378 extends upwardly therefrom toward a larger step 380. A second riser 382 extends upwardly above step 380, and an inner top wall 384 extends across the middle of the coating hood toward depending side wall 374.

A horizontal step 386 extends inwardly from side wall 374, and a vertical riser 388 extends upwardly therefrom toward a larger step 390. Another riser 392 extends upwardly above step 390, and the top wall 384 joins spaced risers 382 and 392. The stepped underside of guide 312 reduces the width across the upper end of the hood.

A blower 394 is secured to a pedestal 396 secured to the upper surface of the flow guide. Blower 394 furnishes finish air through aperture 398 to the plenum 400 defined within the interior of the flow guide.

The high velocity stream of air with coating compound entrained therein from jet slot 364 to receiver slot 369 is indicated by the directional arrows shown in Fig. 8. Baffle 362 enhances the laminar flow characteristics of the stream of air, and improves the uniformity, and reproducibility, of the coating applied to the body of the glass containers 316. The air flow guide 312 introduces a much smaller, low velocity stream of finish air into the upper end of the coating hood 310; the finish air being supplied by blower 394. The configuration of the underside of the air flow guide reduces the lateral internal dimension of the coating hood in the vicinity of the finish of the glass containers passing therethrough. Consequently, although the vapor free finish air supplied by blower 394 may be furnished at a reduced volume, and even at a lower velocity than the air flow exiting jet slot 364, the finish air minimizes the unwanted deposition and/or accumulation of coating compound on the threads and neck of the glass containers. Simultaneously, the finish air flow does not interfere with the coating being applied to the body of each container. The finish air functions as an effective internal air curtain, and intermixing between the vapor free finish air and the high velocity air stream with the coating compound entrained therein is minimal, as will now be described in greater detail. The flow patterns for the finish air, and the high velocity air stream, are indicated by directional arrows in Fig. 8. The two separated flows are combined after passing through receiver slot 369 into chamber 371, and are recirculated through appropriate conduits for coating additional containers 316.

Specifically, Fig. 9 is a perspective view of a fragment of air flow guide 312, such view being taken on an enlarged scale to better depict selected structural features of the guide 312. Blower 394 introduces a stream of finish air, that is, without any coating compound contained therein, into chamber 400 defined in the interior of guide 312. The air is routed through U-shaped tunnels 404 and passes over the threads on the upper end of the neck of container 316. The vapor free air passing through tunnels 404 preferably travels in the same direction as the flow of the high velocity air streams passing over the body of container 316, although the directions of travel may be opposite to each other.

Fig. 10 schematically shows that a plurality of tunnels 404 are defined in risers 382, 392, but the tunnels are offset relative to each other, as will be explained in more detail below. In addition, it is important that tunnels 404 substantially extend along the entire length of the hood. Each tunnel 404 is preferably disposed above a jet slot defined in the side walls 318, 320 of the hood 310, and the tunnels 404 therefore preferably direct finish air flow in the same direction as the jet slots direct the high velocity air stream with the coating compound contained therein. As an example, tunnels 404 may each have a width (in the direction of travel of the containers) of up to approximately 5 cm (preferably 2 - 4 cm) and a height of approximately 0.5 - 2 cm.

It is important to the present invention that tunnels 404 are separated from the coating air slots 364, whereby the finish air streams are blown across the finish of the containers in a specific configuration. Specifically, it is important that the finish air jets exiting from tunnels 404 on both sides of the coating hood be provided in alternating sequence, as shown in Fig. 10, that is, finish air jets on one side being offset in the direction of travel of the containers from the finish air jets on the other side. Thus, since the air from the finish air jets emerges at a diverging angle, the finish air jets form an envelope with lateral boundaries, with the lateral boundaries of one envelope on one side being substantially coincident with the lateral boundaries of the two laterally offset and adjacent boundaries on the other side of the coating hood. For a turbulent free air jet, it is preferred that the jet angle be approximately 20 degrees, that is, that the envelope have an angle of approximately 40 degrees.

As a result, a quiet zone between two finish air jets blowing from one side is completely filled with moving air from one of the opposing finish air jets blowing from the other side, without interference between the opposing finish air jets. This means that intermixing of the finish air jets at the lateral boundaries of the envelopes thereof only occurs with other finish air jets, since there is no quiet zone which can be reached by a coating air jet. Thus, each finish air jet is only in contact with the coating air jets in the lower part of the hood, that is, at the lower part of the finish air curtain, so that intermixing of the coating air with the finish air is minimized and the finish air contacting the container finish is effectively free of coating compound. In addition, there is no effective increase in the amount of coating compound consumed.

In order to further minimize any intermixing of the finish air and coating air, tunnels 404 are spaced above and separated from the upper end of the jet slots 364 discharging the high velocity air stream containing the coating compound. The vertical spacing pattern improves the efficiency of the finish air stream and further reduces and/or minimizes the undesirable accumulation of coating compound on the threads and neck of containers 316. Specifically, tunnels 404 are situated from approximately 2 - 8 cm above the coating jet slots 364 through which the coating air enters the hood. This separation can be effected by side walls 372, 374 and with risers 378, 388 having a height of approximately 2 - 8 cm, thereby providing a blocking skirt for the coating air jets.

In order to further minimize intermixing of the finish air and coating air, the hood is inwardly displaced as a result of steps 376, 380, 386, 390 and risers 378, 382, 388, 392, with tunnels 404 being provided in risers 382, 392, as shown. Thus, the finish air has to travel over a smaller distance than the coating air before it reaches the containers, so that it is less likely that the finish air will be contaminated by the coating air. It will be noted that, in general, the finish of a container is approximately 4 - 7 cm smaller in diameter than the main body of the container. Therefore, the hood wall may be inwardly displaced by the aforementioned steps and risers over a distance of approximately 2 - 3.5 cm, that is, approximately one-half of the difference in diameters, without causing a restriction to the passage of the containers through the hood. This is important taking into consideration various misalignments encountered in normal plant operation.

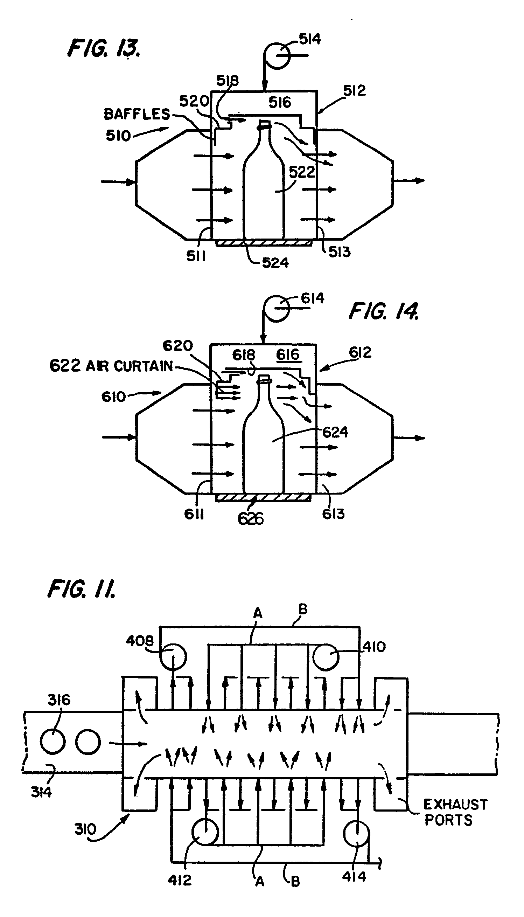

Fig. 11 schematically shows the manner in which high velocity air, with coating compound entrained therein, may be applied to containers 316 passing through coating hood 310. Blowers 408, 410, 412 and 414 are interconnected by aligned jet slots and receiver slots in opposing side walls 318, 320 to define an inner, high velocity recirculating loop A and an outer, lower velocity recirculating loop B. The coating compound is introduced into loop A and is gradually transferred to loop B by eddy currents, intermixing streams, and the like. The recirculating loops, per se, are discussed in considerable detail in U.S. Patent No. 4 389 234, and do not form a part of the instant invention. It is noted that the jet slots in the opposing side walls preferably correspond in location to the tunnels 404.

Fig. 12 schematically depicts a coating hood 410 that includes side walls 411, 413 and utilizes a first alternative embodiment of air flow guide 412. A finish air blower 414 is situated atop guide 412, and the output from the blower flows into a chamber 416 defined within the guide 412 between the roof and the inner top wall. The vapor free finish air flows over barrier 418 and then enters the upper end of hood 410 through openings 420 situated above one of the side walls of the hood. The flow of finish air effectively confines the high velocity air stream with entrained coating compound to the body of the container, so that coating compound is not deposited on the finish of glass container 422. The containers 422 are advanced through coating hood 410, in single file, by conveyor 424. The flow patterns established within coating hood 410 are indicated by the directional arrows shown in Fig. 12. Openings 420 are formed in the same alternating sequence as tunnels 404 of Fig. 10 and are vertically separated from the coating air slots in the same manner.

Fig. 13 schematically depicts a coating hood 510 that includes side walls 511, 513 and utilizes a second alternative embodiment of air flow guide 512. A finish air blower 514 is situated atop guide 512, and the output from the blower flows into a chamber 516 defined within the guide 512 between the roof and the inner top wall. The vapor free finish air flows into openings 518 defined between the upper end of baffles 520 and the lower surface of guide 512. The baffles 520 are configured to reduce the lateral dimension of the coating hood at the upper end of the chamber. The flow of finish air confines the high velocity air stream with entrained coating compound to the body of the container 522. Conveyor 524 advances the containers 522 through the coating hood, in single file. The flow patterns established within coating hood 510 are indicated by the directional arrows in Fig. 13. Openings 520 are formed in the sane alternating sequence as tunnels 404 of Fig. 10 and are vertically separated from the coating air slots in the same manner.

Fig. 14 schematically depicts a coating hood 610 that includes side walls 611, 613 and utilizes a third alternative embodiment of air flow guide 612. A finish air blower 614 is situated atop guide 612, and the output from the blower flows into a chamber 616 defined within the guide 612 between the roof and the inner top wall. The vapor free finish air flows into openings 618 defined between the upper end of baffles 620 and the lower surface of guide 612. The baffles 620 reduce the lateral dimension of the coating hood at the upper end of the chamber. Small barriers 622 define an air curtain spaced vertically below openings 618. The finish air passing through openings 618 and barriers 622 flows over the threads and neck of the containers, respectively, and confines the high velocity air stream with entrained coating compound to the body of the containers 624. The containers 624 are advanced through the coating hood, in single file, by conveyor 626. The flow patterns established within coating hood 610 are indicated by the directional arrows shown in Fig. 14. Again, openings 620 are formed in the same alternating sequence as tunnels 404 of Fig. 10 and are vertically separated from the coating air slots in the same manner. It should be noted in the air flow guides depicted in Figs. 6 - 14 that the vapor free finish air enters the upper end of the coating chamber a small distance below the level of the inner top wall. Actual usage in the field has demonstrated that the finish air entrance, be it through a tunnel, baffle, air curtain, slit, or other opening, should be spaced approximately up to 1 cm below the inner top wall for maximum effectiveness.

With the system according to the present invention, tests have shown that the thickness of the coating on the finish is approximately 0 - 3 CTUs (coating thickness units) when the thickness of the coating on the main body is approximately 35 CTUs. A CTU is a conventional measure of the thickness of the coating by the American Glass Research Institute of Butler, Pa. This was measured with a finish air speed of only 2 m/sec., as measured in tunnels 404. Further, with these tests, the effect of coating air dilution by finish air could not be detected in the coating chemical consumption. This is in stark contrast to a coating thickness on the finish which is one-third that on the main body, as in the prior art. Further, this was achieved with a supply of finish air from blower 394 at the rate of only 0.36 m$^3$/min. There were seven tunnels 404 on each side of the hood, each tunnel 404 having a height of 1 cm, a width of 2.5 cm, and being spaced from the roof by 0.8 cm. The hood length was 80 cm and the clearance between the container and the roof was 0.5 cm.

A preferred embodiment of air flow guide 312 for the coating hood 310 has been described in detail, and alternative embodiments of air flow guides 410, 510 and 610 have been described in lesser detail. The unique flow guides can be employed within coating hoods of different constructions, and may be used with hoods relying upon recirculating loops or with single pass flow paths. Manifestly, other changes in the shape of the air flow guides, the location of the slits, tunnels and openings, will occur to the skilled artisan, within the scope of the claims. Reference numerals have been included in the claims to meet the requirements of the European Patent Convention as interpreted by the European Patent Office, but it is not intended that the insertion of these numerals shall reduce the scope of the claims.

## Claims

1. A coating hood (310, 410, 510, 610) for applying protective coatings to glass containers (316, 422, 522, 624) having a main body and a finish, said coating hood comprising:

(a) a tunnel through which hot glass containers pass;

(b) means (362 to 368) for forming coating jets for contacting the outside surface of said containers with a coating chemical to form a metal oxide coating on said outside surface, when said containers (316, 422, 522, 624) are in said tunnel;

(c) a plurality of finish air jet forming means (404, 420, 518, 618) positioned on opposite sides of the finish of said containers for supplying coating free air across the finish of said containers as the latter are transported through said coating hood;

(d) means (394, 398, 400) for supplying said coating free air to said finish air jet forming means;

characterized by

(e) the finish air jet forming means (404, 420, 518, 618) on one side of said containers being offset in the longitudinal direction of said hood (310, 410, 510, 610) with respect to the finish air jet forming means (404, 420, 518, 618) on the other side of the containers (316, 422, 522, 624); and

(f) each said finish air jet forming means (404, 420, 518, 618) supplying an envelope of said coating free air across the finish of said containers (316, 422, 522, 624) such that lateral boundaries of the envelope of each finish air jet forming means (404, 420, 518, 618) on one side of said containers (316, 422, 522, 624) are substantially coincident with lateral boundaries of the envelopes of the offset and laterally adjacent air jet forming means (404, 420, 518, 618) on the other side of said containers (316, 422, 522, 624).

2. A coating hood (310, 410, 510, 610) as defined in Claim 1; further characterized in that each said finish air jet forming means (404, 420, 518, 616) includes an opening having a substantially rectangular configuration such that the lateral boundaries of each envelope are substantially vertical.

3. A coating hood (310, 410, 510, 610) as defined in Claim 1 or Claim 2; further characterized by an air flow guide (312, 412, 512, 612) secured between side walls (318, 320) adjacent the upper end of the coating hood (310, 410, 510, 610), said air flow guide including a horizontal roof (370), first and second depending side walls (372, 374), a stepped underside (376 to 382, 386 to 392) that terminates in a centrally located inner top wall (384) spaced below said roof (370), and a chamber (400, 416, 516, 616) defined between said roof (370), depending side walls (372, 374), stepped underside (376 to 382, 386 to 392) and top wall (384); and wherein said finish air jet forming means (404, 420, 518, 618) are formed in said stepped underside.

4. A coating hood (310, 410, 510, 610) as defined in Claim 3; further characterized in that said finish air jet forming means (404, 420, 518, 618) are spaced from said inner top wall (384) of said air flow guide (312, 412, 512, 612) by a distance of up to 1 cm.

5. A coating hood (310, 410, 510, 610) as defined in any preceding claim; further characterized in that said finish air jet forming means (404, 420, 518, 618) are inwardly spaced toward said containers (316, 422, 522, 624) with respect to said coating jet forming means (362 to 368).

6. A coating hood (310, 410, 510, 610) as defined in any preceding claim; wherein there are a plurality of coating jet forming means (362 to 368), and said finish air jet forming means (404, 420, 518, 618) are located in vertical alignment with said coating jet forming means (362 to 368) such that the flow of coating free air from said finish air jet forming means (404, 420, 518, 618) is in the same direction as the high velocity flow of air from said coating jet forming means (362 to 368).

7. A coating hood (310, 410, 510, 610) as defined in any preceding claim; further characterized in that said finish air jet forming means (404, 420, 518, 618) is vertically separated from said coating jet forming means (362 to 368) by a distance of at least 2 cm.

8. A coating hood (310, 410, 510, 610) as defined in Claim 7; further characterized in that said finish air jet forming means (404, 420, 518, 618) is vertically separated from said coating jet forming means (362 to 368) by a distance of approximately 2 - 8 cm.

9. A coating hood (310, 410, 510, 610) as defined in any preceding claim; further characterized in that there are a plurality of finish air jet forming means (404, 420, 518, 618) on each side of said hood.

10. A method for applying protective coatings to glass containers (316, 422, 522, 624) having a main body and a finish, said method comprising the steps of:

(a) transporting the glass containers (316, 422, 522, 624) to be coated longitudinally through a coating hood (310, 410, 510, 610);

(b) introducing a coating compound into said coating hood (310, 410, 510, 610) through at least one feedpoint;

(c) supplying the coating compound entrained in air through coating jet forming means (362 to 368) to the main body of said containers as the latter are transported between side walls (318, 320) of said coating hood;

(d) supplying coating free air across the finish of said containers (316, 422, 522, 624) as the latter are transported through said coating hood (310, 410, 510, 610);

characterized by the steps of:

(e) supplying coating free air across the finish of said containers (316, 422, 522, 624) as the latter are transported through said coating hood (310, 410, 510, 610) by a plurality of finish air jet forming means (404, 420, 518, 618) positioned on opposite sides of the finish of said containers, the finish air jet forming means (404, 420, 518, 618) on one side of said containers being offset in the longitudinal direction of said hood (310, 410, 510, 610) with respect to the finish air jet forming means (404, 420, 518, 618) on the other side of the containers;
and

(f) said step of supplying coating free air including the step of supplying an envelope of said coating free air across the finish of said containers (316, 422, 522, 624) such that lateral boundaries of the envelopes of each finish air jet forming means (404, 420, 518, 618) on one side of said containers are substantially coincident with lateral boundaries of the envelopes of the offset and laterally adjacent finish air jet forming means (404, 420, 518, 618) on the other side of said containers.

11. A method as defined in Claim 10; further characterized in that said step of supplying an envelope includes the step of forming said lateral boundaries of said envelope to be substantially vertical by forming each said finish air jet forming means (404, 420, 518, 618) with an opening having a substantially rectangular configuration.

12. A method as defined in Claim 10 or Claim 11; wherein an air flow guide (312, 412, 512, 612) is secured between side walls (318, 320) of said coating hood (310, 410, 510, 610) adjacent the upper end thereof, said air flow guide (312, 412, 512, 612) including a horizontal roof (370), first and second depending side walls (372, 374), a stepped underside (376 to 382, 386 to 392) that terminates in centrally located inner top wall (384) spaced below said roof (370), and a chamber (400, 416, 516, 616) defined between said roof (370), depending side walls (372, 374), stepped underside (376 to 382, 386 to 392) and top wall (384); and said finish air jet forming means (404, 420, 518, 618) are formed in said stepped underside; and further characterized in that said step of supplying coating free air includes the step of supplying said coating free air to the finish of said containers at a position spaced from said inner top wall (384) of said air flow guide (312, 412, 512, 612) by a distance of up to 1 cm.

13. A method as defined in any one of claims 10 to 12; further characterized in that said step of supplying coating free air includes the step of supplying said coating free air through said finish air jet forming means (404, 420, 518, 618) at a position inwardly spaced toward said containers (316, 422, 522, 624) with respect to the position that said air with coating material entrained therein is supplied through said coating jet forming means (362 to 368).

14. A method as defined in any one of claims 10 to 13; further comprising the step of supplying said coating free air in vertical alignment with and in the same direction as the air entrained with said coating material.

15. A method as defined in any one of claims 10 to 14; further characterized in that said step of supplying coating free air includes the step of supplying said coating free air through said finish air jet forming means (404, 420, 518, 618) with a vertical separation of at least 2 cm from the air with the coating compound entrained therein which is supplied from said coating jet forming means (362 to 368).

16. A method as defined in claim 15; further characterized in that said vertical separation is in the range of approximately 2 - 8 cm.

**Patentansprüche**

1. Beschichtungshaube (310, 410, 510, 610) zum Aufbringen von Schutzbeschichtungen auf Glasbehälter (316, 422, 522, 624) mit einem Hauptkörper und einem Finish, insbesondere einem Hals und einem Gewinde, wobei die genannte Beschichtungshaube umfaßt:

(a) einen Tunnel, durch den heiße Glasbehälter geführt werden;

(b) Einrichtungen (362 bis 368) zum Bilden von Beschichtungsdüsenstrahlen zum Berühren der Außenfläche der genannten Behälter mit einer Beschichtungschemikalie, um eine Metalloxidbeschichtung auf der genannten Außenfläche zu bilden, wenn sich die genannten Behälter (316, 422, 522, 624) in dem genannten Tunnel befinden;

(c) eine Vielzahl von Finishluftstrahldüsenbildungseinrichtungen (404, 420, 518, 618), die auf gegenüberliegenden Seiten des Finish der genannten Behälter positioniert sind, um beschichtungsmittelfreie Luft über das Finish der genannten Behälter zuzuführen, während letztere durch die genannte Beschichtungshaube befördert werden;

(d) Einrichtungen (394, 398, 400) zum Zuführen der genannten beschichtungsmittelfreien Luft zu den genannten Finishluftstrahldüsenbildungseinrichtungen;
dadurch gekennzeichnet, daß

(e) die Finishluftstrahlbildungseinrichtungen (404, 420, 518, 618) auf einer Seite des Behälters in Längsrichtung der genannten Haube (310, 410, 510, 610) versetzt in bezug auf die Finishluftstrahlbildungseinrichtungen (404, 420, 518, 618) auf der anderen Seite der Behälter (316, 422, 522, 624) sind; und

(f) jede der genannten Finishluftstrahlbildungseinrichtungen (404, 420, 518, 618) eine Umhüllende für die genannte beschichtungsmittelfreie Luft quer über das Finish jedes Behälters (316, 422, 522, 624) bildet, sodaß seitliche Grenzen der Umhüllenden jeder Finishluftstrahlbildungseinrichtung (404, 420, 518, 618) auf einer Seite der genannten Behälter (316, 422, 522, 624) im wesentlichen mit seitlichen Grenzen der Umhüllenden der versetzten und seitlich angrenzenden Luftstrahlbildungseinrichtungen (404, 420, 518, 618) auf der anderen Seite der genannten Behälter (316, 422, 522, 624) zusammenfallen.

2. Beschichtungshaube (310, 410, 510, 610) nach Anspruch 1, weiters dadurch gekennzeichnet, daß jede der genannten Finishluftstrahlbildungseinrichtungen (404, 420, 518, 618) eine Öffnung von im wesentlichen rechteckiger Konfiguration aufweist, sodaß die seitlichen Grenzen jeder Umhüllenden im wesentlichen vertikal verlaufen.

3. Beschichtungshaube (310, 410, 510, 610) nach Anspruch 1 oder 2, weiters dadurch gekennzeichnet, daß eine Luftstromführung (312, 412, 512, 612) zwischen Seitenwänden (318, 320) angrenzend an das obere Ende der Beschichtungshaube (310, 410, 510, 610) befestigt ist und die genannte Luftstromführung ein horizontal es Dach (370), eine erste und zweite nach unten abstehende Seitenwand (372, 374), eine abgestufte Unterseite (376 bis 382, 386 bis 392), die in eine mittig angeordnete innere Oberwand (384) mündet, die im Abstand unterhalb des genannten Daches (370) ausgebildet ist, und eine Kammer (400, 416, 516, 616) vorgesehen ist, die zwischen dem genannten Dach (370), den nach unten abstehenden Seitenwänden (372, 374), der abgestuften Unterseite (376 bis 382, 386 bis 392) und der Oberwand (384) ausgebildet ist; und daß die genannten Finishluftstrahlbildungseinrichtungen (404, 420, 518, 618) in der genannten abgestuften Unterseite ausgebildet sind.

4. Beschichtungshaube (310, 410, 510, 610) nach Anspruch 3, weiters dadurch gekennzeichnet, daß die genannten Finishluftstrahlbildungseinrichtungen (404, 420, 518, 618) von der genannten inneren Oberwand (384) der genannten Luftstromführung (312, 412, 512, 612) in einem Abstand von bis zu 1 cm entfernt angeordnet.

5. Beschichtungshaube (310, 410, 510, 610) nach einem der vorhergehenden Ansprüche, weiters dadurch gekennzeichnet, daß die genannten Finishluftstrahlbildungseinrichtungen (404, 420, 518, 618) im Abstand nach innen auf die genannten Behälter (316, 422, 522, 624) zu in bezug auf die Beschichtungsstrahlbildungseinrichtungen (362 bis 368) angeordnet sind.

6. Beschichtungshaube (310, 410, 510, 610) nach einem der vorhergehenden Ansprüche, worin eine Vielzahl von Beschichtungsstrahlbildungseinrichtungen (362 bis 368) vorgesehen ist und die genannten Finishluftstrahlbildungseinrichtungen (404, 420, 518, 618) in vertikaler Ausrichtung mit den genannten Beschichtungsstrahlbildungseinrichtungen (362 bis 368) angeordnet sind, sodaß der Strom von beschichtungsmittelfreier Luft von den genannten Finishluftstrahlbildungseinrichtungen (404, 420, 518, 618) in der gleichen Richtung strömt wieder Hochgeschwindigkeitsstrom von Luft aus den genannten Beschichtungsstrahlbildungseinrichtungen (362 bis 368).

7. Beschichtungshaube (310, 410, 510, 610) nach einem der vorhergehenden Ansprüche, weiters dadurch gekennzeichnet, daß die genannten Finishluftstrahlbildungseinrichtungen (404, 420, 518, 618) vertikal von den genannten Beschichtungsstrahlbildungseinrichtungen (362 bis 368) durch einen Abstand von wenigstens 2 cm getrennt sind.

8. Beschichtungshaube (310, 410, 510, 610) nach Anspruch 7, weiters dadurch gekennzeichnet, daß die genannten Finishluftstrahlbildungseinrichtungen (404, 420, 518, 618) vertikal von den genannten Beschichtungsstrahlbildungseinrichtungen (362 bis 368) durch einen Abstand von etwa 2 bis 8 cm getrennt sind.

9. Beschichtungshaube (320, 410, 510, 610) nach einem der vorhergehenden Ansprüche, weiters dadurch gekennzeichnet, daß eine Vielzahl von Finishluftstrahlbildungseinrichtungen (404, 420, 518, 618) auf jeder Seite der genannten Haube vorgesehen ist.

10. Verfahren zum Aufbringen von Schutzbeschichtungen auf Glasbehälter (316, 422, 522, 624) mit einem Hauptkörper und einem Finish, d. h. einem Hals und einem Gewinde, das genannte Verfahren umfassend die Schritte:

(a) Befördern der zu beschichtenden Glasbehälter (316, 422, 522, 624) in Längsrichtung durch eine Beschichtungshaube (310, 410, 510, 610);

(b) Einbringen einer Beschichtungsmasse in die genannte Beschichtungshaube (310, 410, 510, 610) durch wenigstens einen Zufuhrpunkt;

(c) Zuführen der in Luft mitgerissenen Beschichtungsmasse durch Beschichtungsstrahlbildungseinrichtungen (362 bis 368) auf den Hauptkörper der genannten Behälter, während letztere zwischen Seitenwänden (318, 320) der genannten Beschichtungshaube befördert werden;

(d) Zufuhren von beschichtungsmittelfreier Luft über das Finish der genannten Behälter (316, 422, 522, 624), während letztere durch die genannte Beschichtungshaube (310, 410, 510, 610) befördert werden;

gekennzeichnet durch die Schritte:

(e) Zuführen von beschichtungsmittelfreier Luft über das Finish der genannten Behälter (316, 422, 522, 624), während letzere durch die genannte Beschichtungshaube (310, 410, 510, 610) befördert werden, durch eine Vielzahl von Finishluftstrahlbildungseinrichtungen (404, 420, 518, 618), die auf gegenüberliegenden Seiten des Finish der genannten Behälter positioniert sind, wobei die Finishluftstrahlbildungseinrichtungen (404, 420, 518, 618) auf einer Seite der genannten Behälter in Längsrichtung der genannten Haube (310, 410, 510, 610) in bezug auf die Finishluftstrahlbildungseinrichtungen (404, 420, 518, 618) auf der anderen Seite der Behälter versetzt sind; und

(f) der genannte Schritt der Zufuhr von beschichtungsmittelfreier Luft einschließlich des Schrittes der Ausbildung einer Umhüllenden aus der genannten beschichtungsmittelfreien Luft quer über das Finish der genannten Behälter (316, 422, 522, 624) so durchgeführt wird, daß seitliche Grenzen der Umhüllenden jeder der Finishluftstrahlbildungseinrichtungen (404, 420, 518, 618) auf einer Seite der genannten Behälter im wesentlichen mit den seitlichen Grenzen der Umhüllenden der versetzten und seitlich angrenzenden Finishluftstrahlbildungseinrichtungen (404, 420, 518, 618) auf der anderen Seite der genanten Behälter zusammenfallen.

11. Verfahren nach Anspruch 10, weiters dadurch gekennzeichnet, daß der genannte Schritt der Bildung einer Umhüllenden den Schritt des Ausbildens der genannten seitlichen Grenzen der genannten Umhüllenden auf solche Heise umfaßt, daß sie im wesentlichen vertikal verlaufen, indem jede der genannten Finishluftstrahlbildungseinrichtungen (404, 420, 518, 618) mit einer Öffnung von im wesentlichen rechteckiger Konfiguration ausgebildet ist.

12. Verfahren nach Anspruch 10 oder 11, worin eine Luftstromführung (312, 412, 512, 612) zwischen Seitenwänden (318, 320) der genannten Bschichtungshaube (310, 410, 510, 610) angrenzend an das obere Ende derselben befestigt ist und die genannte Luftstromführung (312, 412, 512, 612) ein horizontales Dach (370), eine erste und zweite nach unten abstehenden Seitenwand (372, 374), eine abgestufte Unterseite (376 bis 382, 386 bis 392), die in einer mittig angeordneten inneren Oberwand (384) mündet, die im Abstand unterhalb des genannten Daches (370) angeordnet ist, und eine Kammer (400, 416, 516, 616) aufweist, die zwischen dem genannten Dach (370), den nach unten abstehenden Seitenwänden (372, 374), der abgestuften Unterseite (376 bis 382, 386 bis 392) und der Oberwand (384) ausgebildet ist; und worin die genannten Finishluftstrahlbildungseinrichtungen (404, 420, 518, 618) in der genannten abgestuften Unterseite ausgebildet sind; und weiters dadurch gekennzeichnet, daß der genannte Schritt des Zuführens von beschichtungsmittelfreier Luft das Zuführen der beschichtungsmittelfreien Luft zum Finish der genannten Behälter an einer Stelle umfaßt, die von der genannten inneren Oberwand (384) der genannten Luftstromführung (312, 412, 512, 612) um ei nen Abstand von bis zu 1 cm entfernt ist.

13. Verfahren nach einem der Ansprüche 10 bis 12, weiters dadurch gekennzeichnet, daß der genannte Schritt des Zuführens von beschichtungsfreien Luft den Schritt des Zuführens der genannten beschichtungsfreien Luft durch die genannten Finishluftstrahlbildungseinrichtungen (404, 420, 518, 618) an einer Steile umfaßt, die im Abstand nach innen auf die genannten Behälter (316, 422, 522, 624) zu in bezug auf die Stelle angeordnet ist, an der die genannte, mitgerissenes Beschichtungsmaterial enthaltende Luft durch die genannten Beschichtungsstrahlbildungseinrichtungen (362 bis 368) zugeführt wird.

14. Verfahren nach einem der Ansprüche 10 bis 13, weiters umfassend den Schritt des Zuführens der genannten beschichtungsmittelfreien Luft in Vertikaler Ausrichtung mit und in der gleichen Richtung wie die Luft, die mit dem genannten Beschichtungsmaterial mitgerissen wird.

15. Verfahren nach einem der Ansprüche 10 bis 14, weiters dadurch gekennzeichnet, daß der genannte Schritt des Zuführens der beschichtungsmittelfreien Luft den Schritt des Zuführens der genannten beschichtungsmittelsfreien Luft durch die genannten Finishluftstrahlbildungseinrichtungen (404, 420, 518, 618) mit einer Vertikalen Trennung von wenigstens 2 cm von der Luft mit mitgerissenem Beschichtungsmaterial vorgenommen wird, die von der genannten Beschichtungsstrahlbildungseinrichtung (362 bis 368) zugeführt wird.

16. Verfahren nach Anspruch 15, weiters dadurch gekennzeichnet, daß die genannte vertikale Trennung in einem Bereich von annähernd 2 - 8 cm liegt.

**Revendications**

1. Enceinte de revêtement (310, 410, 510, 610) pour appliquer des revêtement protecteurs à des récipients de verre (316, 422, 522, 624) ayant un corps principal et un fini, ladite enceinte de revêtement comprenant:

(a) un tunnel par où passent des récipients de verre chaud;

(b) un moyen (362 à 368) pour former des jets de revêtement pour mettre la surface extérieure desdits récipients en contact avec un produit chimique de revêtement pour former un revêtement d'oxyde de métal sur ladite surface extérieure, lorsque lesdits récipients (316, 422, 522, 624) sont dans ledit tunnel;

(c) un certain nombre de moyens formant des jets d'air de fini (404, 420, 518, 618) placés sur des côtés opposés du fini desdits récipients pour fournir de l'air sans revêtement à travers le fini desdits récipients tandis que ces derniers sont transportés à travers ladite enceinte de revêtement;

(d) un moyen (394, 498, 400) pour fournir ledit air sans revêtement audit moyen formant des jets d'air de fini;

caractérisée en ce que:

(e) lesdits moyens formant les jets d'air de fini (404, 420, 518, 618) d'un côté desdits récipients sont décalés en direction longitudinale de ladite enceinte (310, 410, 510, 610) par rapport aux moyens formant les jets d'air de fini (404, 420, 518, 618) de l'autre côté des récipients (316, 422, 522, 624);

(f) chaque moyen de formation de jet d'air de fini (404, 420, 518, 618) fournissant une enveloppe dudit air sans revêtement à travers le fini desdits récipients (316, 422, 522, 624), de manière que les limites latérales de l'enveloppe de chaque moyen de formation de jet d'air de fini (404, 420, 518, 618) d'un côté desdits récipients (316, 422, 522, 624) coïncident sensiblement avec les limites latérales des enveloppes des moyens décalés et latéralement adjacents de formation de jets d'air (404, 420, 518, 618) de l'autre côté desdits récipients (316, 422, 522, 624).

2. Enceinte de revêtement (310, 410, 510, 610) selon la revendication 1, caractérisée de plus en ce que chaque moyen de formation de jets d'air de fini (404, 420, 518, 618) comprend une ouverture ayant une configuration sensiblement rectangulaire de manière que les limites latérales de chaque enveloppe soient sensiblement verticales.

3. Enceinte de revêtement (310, 410, 510, 610) selon la revendication 1 ou la revendication 2, caractérisée de plus par un guide d'écoulement d'air (312, 412, 512, 612) fixé entre les parois latérales (319, 320) à proximité de l'extrémité supérieure de l'enceinte de revêtement (310, 410, 510, 610), ledit guide d'écoulement d'air ayant un plafond horizontal (370), des première et seconde parois latérales pendantes (372, 374), un dessous échelonné (376 à 382, 386 à 392) qui se termine par une paroi supérieure interne placée au centre (384) espacée en-dessous dudit plafond (370) et une chambre (400, 416, 516, 616) définie entre ledit plafond (370), les parois latérales pendantes (372, 374), le dessous échelonné (316 à 382, 386 à 392) et la paroi supérieure (384) et en ce que lesdits moyens de formation de jets d'air de fini (404, 420, 518, 618) sont formés dans ledit dessous échelonné.

4. Enceinte de revêtement (310, 410, 510, 610) selon la revendication 3; caractérisée de plus en ce que lesdits moyens de formation de jets d'air de fini (404, 420, 518, 618) sont espacés de ladite paroi supérieure interne (384) dudit guide d'écoulement d'air (312, 412, 512, 612) d'une distance pouvant atteindre 1 cm.

5. Enceinte de revêtement (310, 410, 510, 610) selon l'une quelconque des revendications précédentes; caractérisée de plus en ce que lesdits moyens de formation de jets d'air de fini (404, 420, 518, 618) sont espacés vers l'intérieur, vers lesdits récipients (316, 422, 522, 524) par rapport auxdits moyens de formation de jets d'air de revêtement (362 à 368).

6. Enceinte de revêtement (310, 410, 510, 610) selon l'une quelconque des revendications précédentes; où il y a un certain nombre de moyens de formation de jets d'air de revêtement (362 à 368), et lesdits moyens de formation de jets d'air de fini (404, 420, 518, 618) sont placés en alignement vertical avec les moyens de formation de jets d'air de revêtement (362 à 368) de manière que l'écoulement de l'air sans revêtement desdits moyens de formation de jets d'air de fini (404, 420, 518, 618) soient dans la même direction que l'écoulement à vitesse rapide d'air desdits moyens de formation de jets d'air de revêtement (362 à 368).

7. Enceinte de revêtement (310, 410, 510, 610) selon l'une quelconque des revendications précédentes; caractérisée de plus en ce que ledit moyen de formation de jets d'air de fini (404, 420, 518, 618) est verticalement séparé dudit moyen formant un jet d'air de revêtement (332 à 368) d'une distance d'au moins 2 cm.

8. Enceinte de revêtement (310, 410, 510, 610) selon la revendication 7, caractérisée de plus en ce que ledit moyen de formation d'un jet d'air de fini (404, 520, 518, 618) est verticalement séparé dudit moyen de formation d'un jet d'air de revêtement (362 à 368) d'une distance d'environ 2 - 8 cm.

9. Enceinte de revêtement (310, 410, 510, 610) selon l'une quelconque des revendications précédentes; caractérisée de plus en ce qu'il y a un certain nombre de moyens de formation de jets d'air de fini (404, 420, 518, 618) de chaque côté de ladite enceinte.

10. Procédé d'application de revêtements protecteurs à des récipients de verre (316, 422, 522, 624) ayant un corps principal et un fini, ledit procédé comprenant les étapes de:

(a) transporter les récipients de verre (316, 422, 522, 624) à enduire longitudinalement à travers une enceinte de revêtement (310, 410, 510, 610);

(b) introduire un composé de revêtement dans ladite enceinte de revêtement (310, 410, 510, 610) à travers au moins un point d'alimentation;

(c) fournir le composé de revêtement entraîné dans l'air à travers le moyen de formation de jets de revêtement (362 à 368) jusqu'au corps principal desdits récipients tandis que ceux-ci sont transportés entre les parois latérales (318, 320) de ladite enceinte de revêtement;

(d) fournir de l'air sans revêtement à travers le fini desdits récipients (316, 422, 522, 622) tandis que ces derniers sont transportés à travers ladite enceinte de revêtement (310, 410, 510, 610); caractérisé par les étapes de:

(e) fournir de l'air sans revêtement à travers le fini desdits récipients (316, 422, 522, 624) tandis que ces derniers sont transportés à travers ladite enceinte de revêtement (310, 410, 510, 610) par un certain nombre de moyens de formation de jets d'air de fini (404, 420, 518, 618) placés sur des côtés opposés du fini desdits récipients, les moyens de formation de jets d'air de fini (404, 420, 518, 618) d'un côté desdits récipients étant décalés en direction longitudinale de ladite enceinte (310, 410, 510, 610) par rapport aux moyens de formation de jets d'air de fini (404, 420, 518, 618) de l'autre côté desdits récipients; et

(f) ladite étape de fournir de l'air sans revêtement comprenant l'étape de fournir une enveloppe dudit air sans revêtement à travers le fini desdits récipients (316, 422, 522, 624) de manière que les limites latérales des enveloppes de chaque moyen de formation de jets d'air de fini (404, 420, 518, 618) d'un côté desdits récipients coïncident sensiblement avec les limites latérales des enveloppes des moyens de formation de jets d'air de fini décalés et latéralement adjacents (404, 420, 518, 618) de l'autre côté desdits récipients.

11. Procédé selon la revendication 10, caractérisé de plus en ce que l'étape de fournir une enveloppe comprend l'étape de former lesdites limites latérales de ladite enveloppe pour être sensiblement verticales en formant chaque moyen de formation d'un jet d'air de fin (404, 420, 518, 618) avec une ouverture ayant une configuration sensiblement rectangulaire.

12. Procédé selon la revendication 10 ou la revendication 11 où un guide d'écoulement d'air (312, 412, 512, 612) est fixé entre les parois latérales (318, 320) de ladite enceinte de revêtement (310, 410, 510, 610) à proximité de son extrémité supérieure, ledit guide d'écoulement d'air (312, 412, 512, 612) comprenant un plafond horizontal (370), des première et seconde parois latérales pendantes (372, 374), un dessous échelonné (376 à 382, 386 à 392) qui se termine par une paroi interne supérieure placée au centre (384) qui est espscée en-dessous dudit plafond (370) et une chambre (400, 416, 516, 616) définie entre ledit plafond (370), les parois latérales pendantes (372, 374), le dessous échelonné (376 à 382, 386 à 392) et la paroi supérieure (384); et lesdits moyens de formation de jets d'air de fini (404, 420, 518, 618) sont formés dans ledit dessous échelonné; et caractérisé de plus en ce que ladite étape de fournir de l'air sans revêtement comprend l'étape de fournir ledit air sans revêtement au fini desdits récipients en une position espacée de ladite paroi supérieure interne (384) dudit guide d'écoulement d'air (312, 412, 512, 612) d'une distance pouvant atteindre 1 cm.

13. Procédé selon l'une quelconque des revendications 10 à 12; caractérisé de plus en ce que l'étape de fournir de l'air sans revêtement comprend l'étape de fournir ledit air sans revêtement par ledit moyen de formation de jets d'air de fini (404, 420, 518, 618) en une position espacée vers l'intérieur vers lesdits récipients (316, 422, 522, 624) par rapport à une position où ledit air avec le matériau de revêtement qui y est entraîné est fourni par lesdits moyens de formation de jets d'air de revêtement (362 à 368).

14. Procédé selon l'une quelconque des revendications 10 à 13, comprenant de plus l'étape de fournir ledit air sans revêtement en alignement vertical avec et dans la même direction que l'air entraîné avec ledit matériau de revêtement.

15. Procédé selon l'une quelconque des revendications 10 à 14, caractérisé de plus en ce que ladite étape de fournir de l'air sans revêtement comprend l'étape de fournir ledit air sans revêtement par lesdits moyens de formation de jets d'air de fini (404, 420, 518, 618) avec une séparation verticale d'au moins 2 cm de l'air avec le composé de revêtement qui y est entraîné, qui est fourni par lesdits moyens de formation de jets de revêtement (362 à 368).

16. Procédé selon la revendication 15, caractérisé de plus en ce que ladite séparation verticale est comprise entre environ 2 - 8 cm.

FIG. I.
(PRIOR ART)

FIG. 2.
(PRIOR ART)

## FIG. 3.
### (PRIOR ART)

## FIG. 8.

FIG. 4.
(PRIOR ART)

FIG. 5.

FIG. 12.

FIG. 6.

FIG. 7.

*FIG. 10.*

374  388  404  404
312  384
404  404  372  378

*FIG. 9.*

370
312
384
282  404
380
316
378
376  372

**FIG. 13.**

**FIG. 14.**

**FIG. 11.**